# FASCICULE DE BREVET EUROPEEN

(11) **EP 2 906 859 B1**
(45) Date de publication et mention de la délivrance du brevet: **29.03.2017**
(21) Numéro de dépôt: 13786686.9
(22) Date de dépôt: 07.10.2013
(51) Int. Cl.: F02M 26/70, F16K 1/226, F16K 11/052, F16K 1/20

(54) **VANNE, NOTAMMENT POUR MOTEUR THERMIQUE**
VENTIL, INSBESONDERE FÜR EINE BRENNKRAFTMASCHINE
VALVE, IN PARTICULAR FOR A COMBUSTION ENGINE

(30) Priorité: 10.10.2012 FR 1259688
(43) Date de publication de la demande: 19.08.2015
(73) Titulaire: Valeo Systèmes de Contrôle Moteur, 95800 Cergy Saint Christophe (FR)
(72) Inventeur: HODEBOURG, Grégory, F-78500 Sartrouville (FR); MARTIN, Nicolas, F-78600 Maisons-Laffitte (FR); CRAVO, David, F-95520 Osny (FR)
(74) Mandataire: Garcia, Christine
(86) Numéro de dépôt international: PCT/FR2013/052380
(87) Numéro de publication internationale: WO 2014/057198

(56) Documents cités:
- WO-A1-2007/079983
- FR-A1- 2 838 801
- FR-A1- 2 962 184
- US-A1- 2010 148 107

## Description

La présente invention concerne une vanne, notamment pour moteur thermique.

L'invention s'applique notamment lorsque le moteur thermique est utilisé pour la propulsion d'un véhicule, par exemple d'un véhicule automobile. Il peut s'agir d'un moteur dont le carburant est de l'essence ou du diesel. La vanne peut être intégrée au circuit d'air du moteur thermique.

Au sens de l'invention, on désigne par « circuit d'air de moteur thermique » le circuit entre l'entrée d'admission et la sortie d'échappement du moteur thermique. La vanne peut être disposée dans le circuit d'admission, le circuit d'échappement, ou une boucle de recirculation par laquelle transitent les gaz d'échappement réinjectés à l'admission (EGR en anglais).

Dans le cas d'une vanne comprenant :
- un corps dans lequel est ménagé un conduit dans lequel transite un fluide, et
- un volet monté mobile dans le corps entre une position ouverte et une position fermée dans lequel il doit obturer le conduit,
des problèmes de fuite de la vanne lorsque le volet est en position fermée existent. Pour y remédier, il est connu d'utiliser un joint interposé entre le corps et le volet lorsque ce dernier est dans la position fermée. Néanmoins, un tel joint est susceptible de se dilater du fait des fortes températures pouvant être atteintes dans l'environnement dans lequel il se trouve.

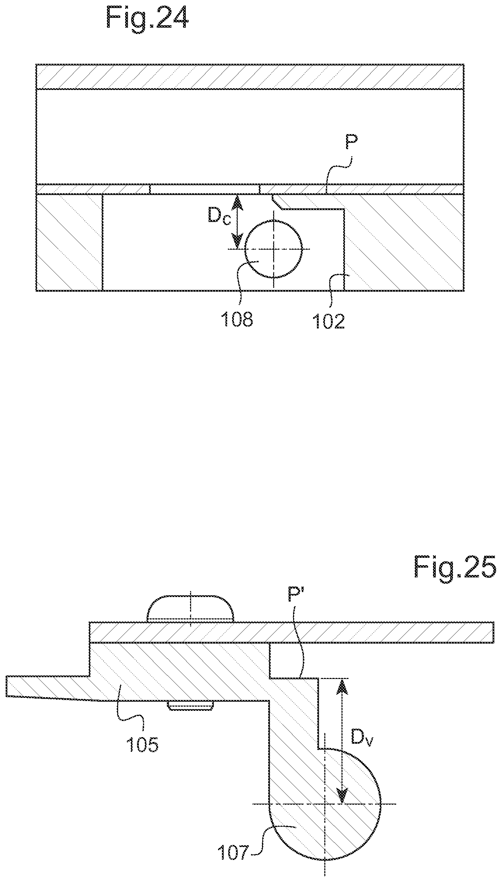

Une autre solution pour remédier à ce problème lié à l'emploi d'un joint est d'amener directement le volet en contact avec le corps lorsque le volet est en position fermée. Néanmoins, une contrainte dimensionnelle entre le volet et la partie du conduit dans laquelle il se déplace doit être respectée pour éviter que le volet ne vienne se coincer contre la paroi de ladite partie du conduit avant d'avoir atteint la position fermée, comme cela va être décrit en référence aux figures 24 et 25.

Sur ces figures, le corps 102 présente un plan de joint P venant au contact d'un plan de joint P' du volet 105 lorsque le volet est dans la position fermée pour obturer le conduit 103 ménagé dans le corps 102. Du fait du caractère rigide des contacts entre le volet et le corps, on constate que le coincement du volet 105 contre la paroi du corps 102 est évité lorsque la distance Dv, mesurée entre le centre de l'axe 107 permettant le pivotement du volet 105 dans le corps 102 et le plan de joint P' du volet 105, est inférieure ou égale à la distance Dc, mesurée entre le centre du logement 108 du corps 102 dans lequel est reçu l'axe 107 et le plan de joint P du corps 102.

Cette contrainte dimensionnelle doit en outre être majorée, pour tenir compte des imprécisions sur les cotes des différentes pièces de la vanne lors de la fabrication de celle-ci. Du fait de cette majoration, des sections vides relativement importantes peuvent exister entre le corps et le volet lorsque le volet est dans la position fermée, ces sections vides, encore appelées « sections de fuite », pouvant occasionner des fuites supérieures à ce qui peut être toléré lorsque le volet est dans la position fermée.

WO2007079983 décrit une vanne selon le préambule de la revendication 1.

Il existe un besoin pour bénéficier d'une vanne relativement simple à fabriquer et remédiant aux inconvénients ci-dessus de façon efficace.

L'invention a pour objet de répondre à ce besoin et elle y parvient, selon l'un de ses aspects, à l'aide d'une vanne, notamment pour moteur thermique, comprenant :
- un corps dans lequel sont ménagés : un logement dans lequel est disposé au moins un palier, et un conduit apte à être parcouru par un fluide, et
- un volet monté pivotant dans le corps par un axe reçu avec jeu radial dans le palier, le volet pivotant entre :
   - une position ouverte, et
   - une position fermée dans laquelle il vient en contact avec le corps par une première zone de contact du volet située d'un premier côté de l'axe et par une deuxième zone de contact du volet située d'une deuxième côté de l'axe opposé audit premier côté,
le passage par le volet de la position ouverte à la position fermée s'accompagnant d'un déplacement radial de l'axe dans le palier.

La vanne ci-dessus permet d'éviter le coincement du volet contre la paroi du conduit lorsque le volet passe dans la position fermée sans qu'il soit nécessaire de respecter de contrainte dimensionnelle trop exigeante entre le volet et la partie du conduit dans laquelle il se déplace.

Cette contrainte dimensionnelle est réduite grâce à l'utilisation du jeu du ou des paliers qui constitue une variable d'ajustement vis-à-vis des imprécisions sur les cotes des différentes pièces de la vanne lors de la fabrication de celle-ci.

De préférence, le volet n'est pas directement en contact avec le corps lorsqu'il est en position ouverte.

Lors de son déplacement, le volet peut être dans une seule position fermée, dans laquelle il vient en contact avec le corps.

La vanne peut être une vanne disposée dans le circuit d'admission du moteur thermique, dans le circuit d'échappement du moteur thermique, ou dans une boucle de recirculation des gaz d'échappement permettant à ces derniers d'être réinjectés à l'admission du moteur thermique. Cette boucle de recirculation peut être « basse pression » ou « haute pression ».

La vanne est notamment une vanne dite « deux voies ».

En variante, la vanne peut être une vanne dite « trois voies ». La vanne peut alors être disposée à l'entrée de la boucle de recirculation, c'est-à-dire à l'endroit du circuit d'échappement où prend naissance la boucle de recirculation. La vanne dite « trois voies » peut en variante être disposée à la sortie de la boucle de recirculation, c'est-à-dire à l'endroit du circuit d'admission où les gaz d'échappement sont réinjectés à l'admission.

La vanne peut ainsi être une vanne d'au plus trois voies.

La position fermée, dans laquelle le volet obture le conduit, et la position ouverte peuvent chacune être des positions extrêmes pour le pivotement du volet. Autrement dit, le pivotement du volet entre la position ouverte et la position fermée définit l'amplitude maximale du mouvement en rotation du volet.

La vanne est avantageusement dépourvue d'élément flexible interposé entre le volet et le corps lorsque le volet est dans la position fermée. « Flexible » est ici utilisé par opposition à « rigide », le corps et le volet étant alors rigides.

Un tel élément flexible est par exemple un joint d'étanchéité.

Le volet et l'axe peuvent être reliés par un support s'étendant le long d'au moins une portion de l'axe. L'axe et le volet sont disposés dans des plans distincts.

La vanne présente ainsi un axe déporté par rapport au volet, contrairement aux vannes dans lesquels l'axe et le volet sont disposés dans de mêmes plans.

Le corps peut présenter un plan de joint du corps venant contacter l'une au moins de la première et de la deuxième zone de contact du volet lorsque le volet est dans la position fermée et l'une au moins de la première et de la deuxième zone de contact du volet peut appartenir à un plan de joint du volet.

La première zone de contact du volet peut appartenir à un plan de joint du volet distinct de tout plan coupant l'axe.

La deuxième zone de contact du volet peut appartenir à un autre plan de joint du volet distinct de tout plan coupant l'axe.

Lorsque le volet est dans la position fermée, le plan de joint du corps et le plan de joint du volet ont au moins un point de contact. Le jeu radial du ou des paliers peut éloigner une partie du volet du plan de joint du corps, lorsque le volet passe dans la position fermée.

La distance entre le centre du logement et le plan de joint du corps peut être supérieure à la distance entre le centre de l'axe et le plan de joint du volet. Cette contrainte dimensionnelle, généralement imposée, permet d'éviter le coincement du volet contre la paroi du conduit lorsque le volet passe dans la position fermée. Lorsque cette contrainte est respectée, le jeu du palier n'est pas nécessaire pour éviter le coincement du volet contre la paroi du conduit. La deuxième zone de contact du volet contre le corps peut permettre d'empêcher un déplacement trop important de l'axe dans le palier, et ainsi d'empêcher que de trop grandes sections de fuite n'existent lorsque le volet est dans la position fermée. On réduit ainsi l'utilisation du jeu radial disponible dans le ou les paliers, étant donné que le déplacement du volet du fait de ce jeu pour éviter le coincement n'est alors pas nécessaire.

En variante, la distance entre le centre du logement et le plan de joint du corps peut être inférieure à la distance entre le centre de l'axe et le plan de joint du volet. Ce cas peut se produire bien que l'on ait cherché à respecter la contrainte dimensionnelle ci-dessus, en raison des imprécisions sur les cotes des pièces de la vanne lors de la fabrication de celles-ci. En l'absence d'utilisation du jeu du ou des paliers, ce cas conduit au coincement du volet contre la paroi du conduit lorsque le volet passe dans la position fermée, ce qui empêche normalement d'utiliser une telle vanne. L'utilisation du jeu dans le ou les paliers permet de se ramener au cas précédent dans lequel il n'y a pas de coincement.

L'invention peut ainsi permettre que des vannes dans lesquelles, pour des raisons d'imprécision sur les cotes des pièces de la vanne lors de la fabrication de celles-ci, la contrainte dimensionnelle ci-dessus entre le volet et la paroi du corps dans laquelle il se déplace ne serait pas respectée, soient néanmoins utilisables.

Le jeu dans le ou les paliers peut être dimensionné pour être supérieur ou égal à un taux d'imprécision global prédéfini pour le volet et la partie du conduit dans laquelle le volet se déplace, ce taux d'imprécision global prédéfini résultant notamment de la combinaison linéaire de taux d'imprécision unitaires prédéfinis pour chaque cote du volet et de la partie du conduit dans laquelle le volet se déplace. Chaque taux d'imprécision unitaire prédéfini est par exemple fixé en fonction du retour d'expérience sur la technique utilisée pour fabriquer la pièce correspondante de la vanne.

Le taux d'imprécision global prédéfini peut être obtenu en ajoutant les taux d'imprécision unitaires prédéfinis pour les cotes suivantes :
- distance entre le centre du logement et le plan de joint du corps
- distance entre le centre de l'axe et le plan de joint du volet
- épaisseur du volet,
- hauteur d'une rainure ménagée dans le conduit, l'une des parties du volet au niveau de laquelle se situe la deuxième zone de contact dans la position fermée se déplaçant dans cette rainure lorsque le volet passe de la position ouverte à la position fermée.

Selon un premier exemple de mise en oeuvre de l'invention, l'une au moins de la première et de la deuxième zone de contact du volet forme avec le corps un contact linéique lorsque le volet est dans la position fermée.

Chaque zone de contact du volet peut former avec le corps un contact linéique lorsque le volet est dans la position fermée.

Selon ce premier exemple de mise en oeuvre de l'invention, seule la première zone de contact du volet peut venir en contact avec le plan de joint du corps lorsque le volet est dans la position fermée. La deuxième zone de contact du volet peut appartenir à un autre plan du volet et venir au contact du corps ailleurs que dans le plan de joint du corps lorsque le volet est dans la position fermée. Le plan de joint du volet et cet autre plan du volet peuvent alors appartenir à des faces opposées du volet, ce dernier se présentant notamment sous la forme d'une plaque.

Le volet peut avoir en section une forme rectangulaire et la première zone de contact et la deuxième zone de contact étant situées à des extrémités opposées du volet.

En variante, le volet peut avoir en section la forme d'une demi-lune dont le diamètre est prolongé par un rectangle et la première zone de contact peut être située sur le cercle de la demi-lune tandis que la deuxième zone de contact est portée par le côté du rectangle opposé au côté du rectangle confondu avec le diamètre de la demi-lune.

Lorsque la partie du volet portant la deuxième zone de contact dans la position fermée se déplace dans une rainure ménagée dans le corps et faisant partie du conduit, la deuxième zone de contact peut alors contacter le fond de la rainure formé par ledit autre plan.

Selon un deuxième exemple de mise en oeuvre de l'invention, l'une au moins de la première et de la deuxième zone de contact du volet peut former avec le plan de joint du corps un contact plan lorsque le volet est dans la position fermée.

Chaque zone de contact du volet forme par exemple avec le plan de joint du corps un contact plan lorsque le volet est dans la position fermée.

La première et la deuxième zone de contact du volet peuvent appartenir au plan de joint du volet et chacune desdites zones de contact du volet contacte alors le plan de joint du corps lorsque le volet est dans la position fermée. Le volet peut alors être auto-centreur, du fait que les contacts entre le volet et le corps s'effectuent dans un seul et même plan lorsque le volet est dans la position fermée et qu'un jeu radial existe dans le ou les paliers. Avec une telle vanne, lorsque le volet est dans la position fermée, les contacts entre le volet et le corps peuvent permettre l'immobilisation de l'axe sans que ce dernier ne soit au contact du ou des paliers.

Le plan de joint du volet peut être distinct de tout plan coupant l'axe.

Selon ce deuxième exemple de mise en oeuvre de l'invention, la première zone de contact du volet peut être portée par une première partie du volet et appartenir à la face supérieure de ladite première partie, la deuxième zone de contact du volet peut être portée par une deuxième partie du volet et appartenir à la face inférieure de ladite deuxième partie. Autrement dit, selon ce deuxième exemple de mise en oeuvre de l'invention, la première et la deuxième zone de contact peuvent appartenir à des faces opposées du volet tout en étant dans le même plan..

La première et la deuxième partie peuvent être chacune une pièce distincte, lesdites pièces étant rigidement couplées entre elles pour former le volet. Chacune de ces pièces est par exemple une plaque. Lesdites pièces sont notamment rigidement couplées entre elles au niveau du plan de joint du volet.

Selon ce deuxième exemple de mise en oeuvre de l'invention, la partie du conduit dans laquelle le volet se déplace peut être ménagée dans deux pièces du corps rigidement couplées entre elles au niveau du plan de joint du corps. Une partie du plan de joint du corps peut être définie par la face supérieure d'une de ces pièces du corps qui vient alors en contact avec la partie de la face inférieure de la deuxième partie du volet formant la deuxième zone de contact lorsque le volet est dans la position fermée tandis qu'une autre partie du plan de joint du corps peut être définie par la face inférieure d'une autre des pièces du corps qui vient alors en contact avec la partie de la face supérieure de la première partie du volet formant la première zone de contact lorsque le volet est dans la position fermée.

Selon le deuxième exemple de mise en oeuvre de l'invention, la longueur de la deuxième partie du volet, mesurée le long de l'axe, peut être inférieure à la longueur de la première partie du volet, mesurée le long de l'axe. Le volet est alors formé par deux parties de longueur différente, la longueur de la première partie pouvant être telle qu'aucune fuite en position fermée n'existe au niveau de cette première partie tandis que seule la deuxième partie occasionne des fuites.

L'invention pourra être mieux comprise à la lecture de la description qui va suivre d'exemples non limitatifs de mise en oeuvre de celle-ci et à l'examen du dessin annexé sur lequel :

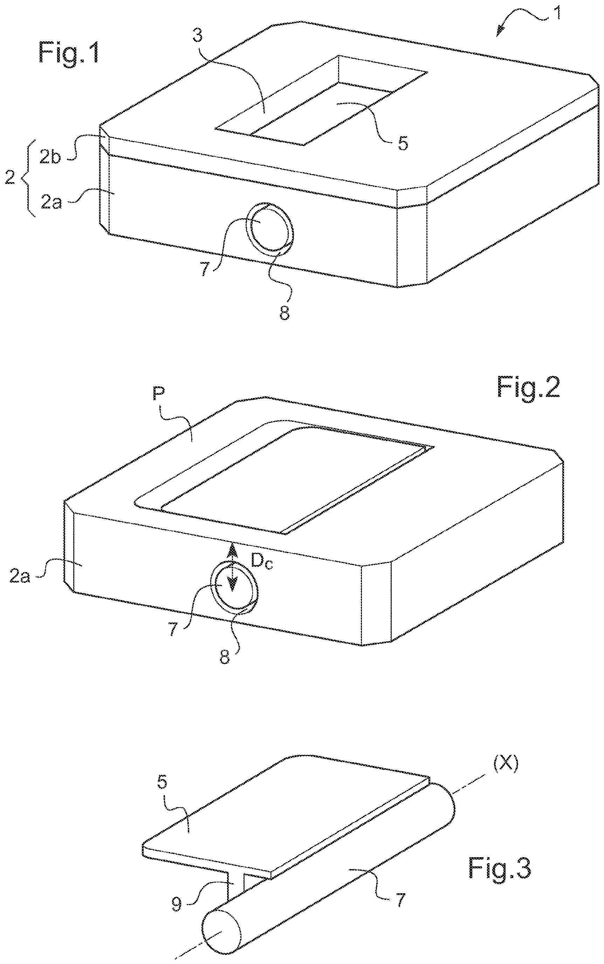

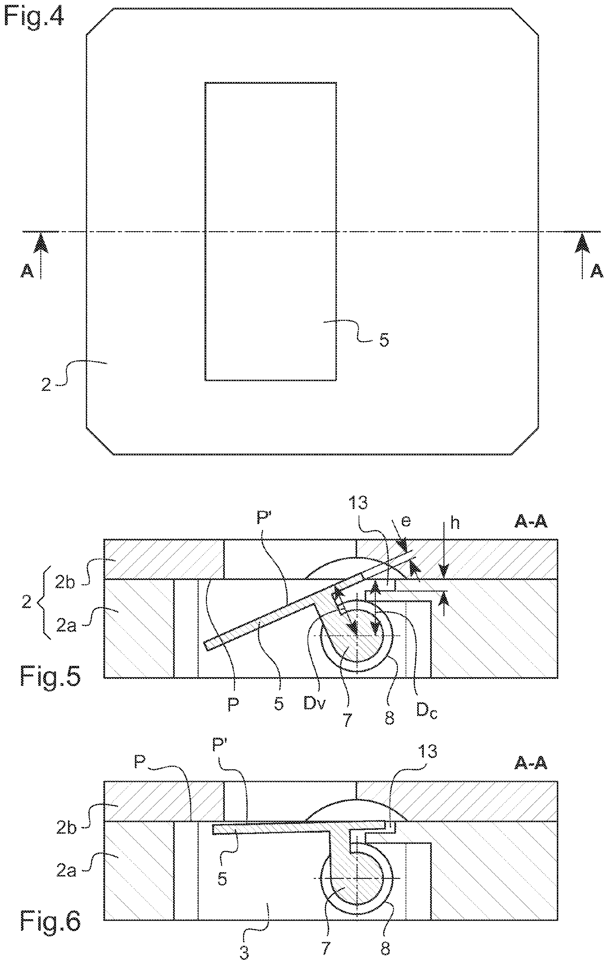

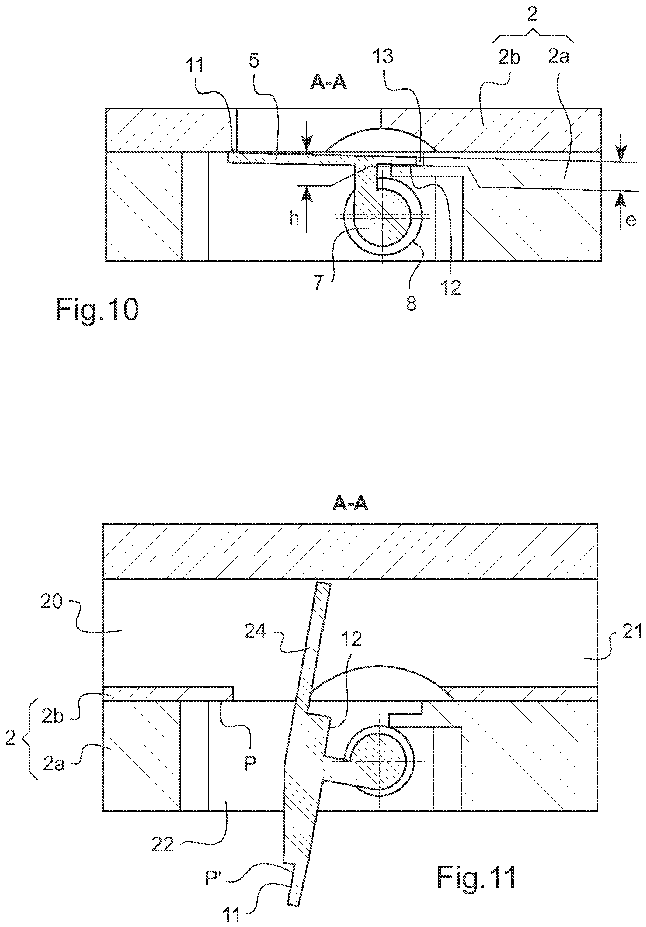

- les figures 1 à 11 se rapportent à une vanne selon un premier exemple de mise en oeuvre de l'invention, les figures 1 et 2 représentant en élévation la vanne, la figure 3 représentant le volet et l'axe isolément, la figure 4 étant une vue de dessus de la vanne de la figure 1, les figures 5 à 7 représentant en coupe selon A-A une première vanne similaire à celle de la figure 4, les figures 8 à 10 représentant en coupe selon A-A une deuxième vanne similaire à celle de la figure 4, et la figure 11 représentant de façon schématique une vanne selon le premier exemple de mise en oeuvre de l'invention lorsqu'elle est de type « trois voies »,

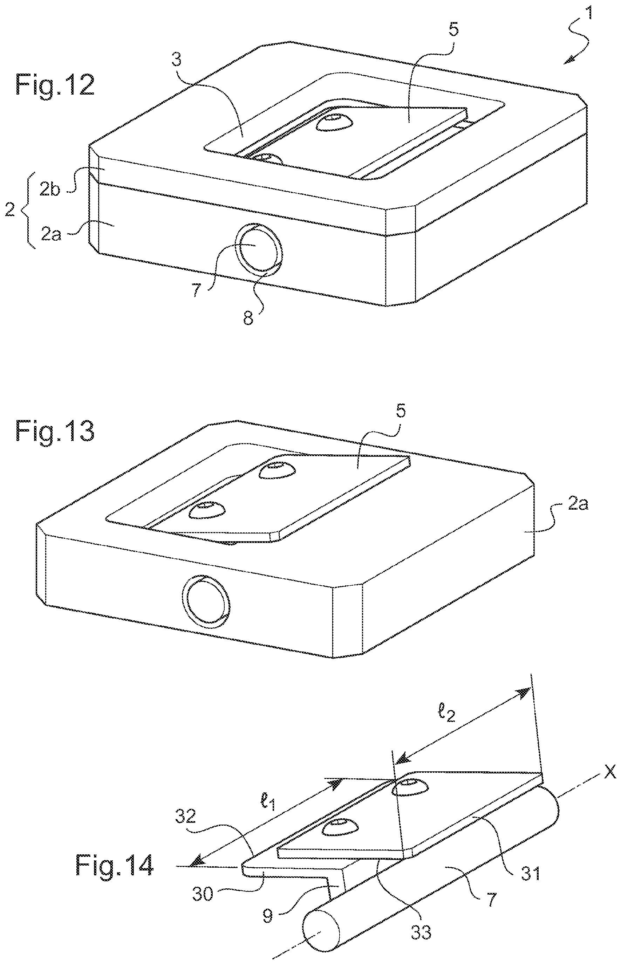

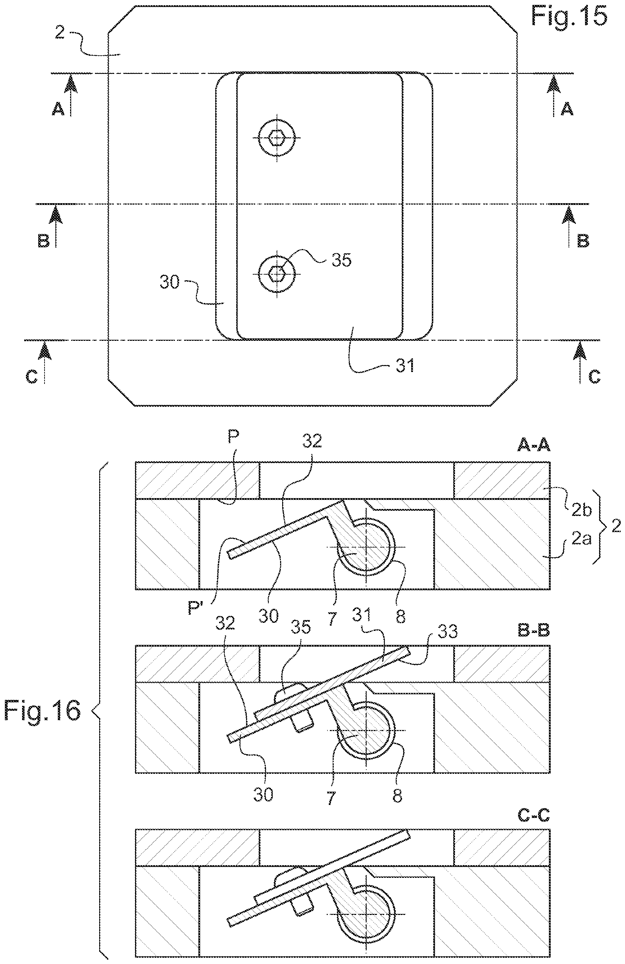

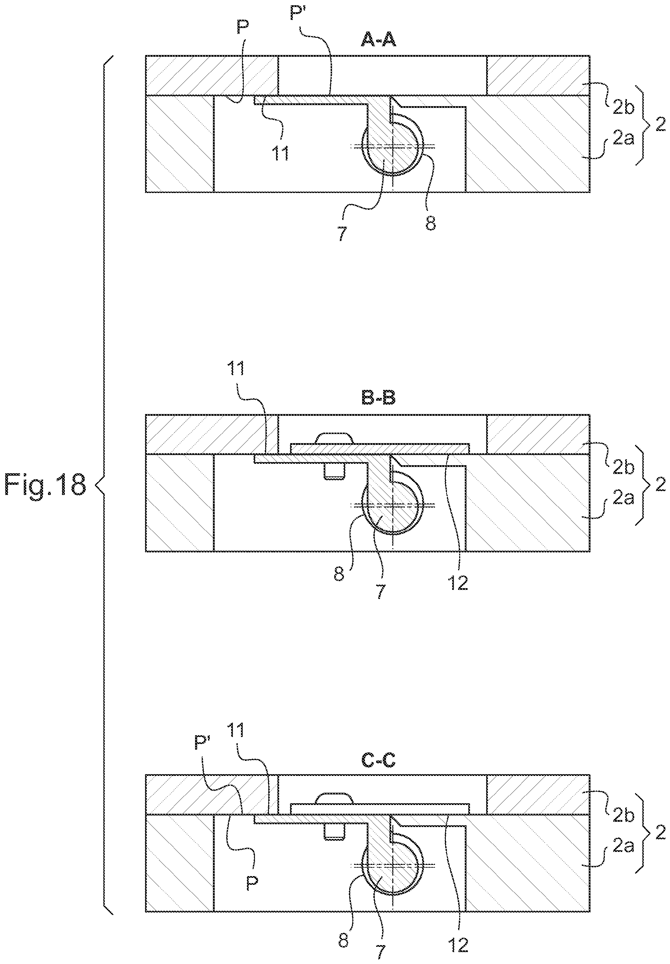

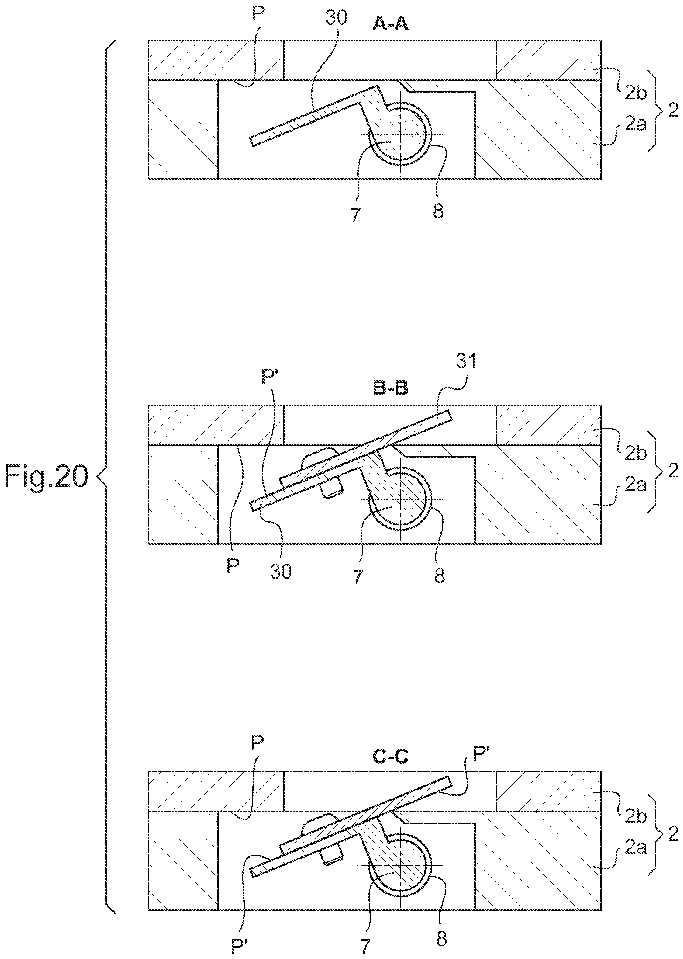

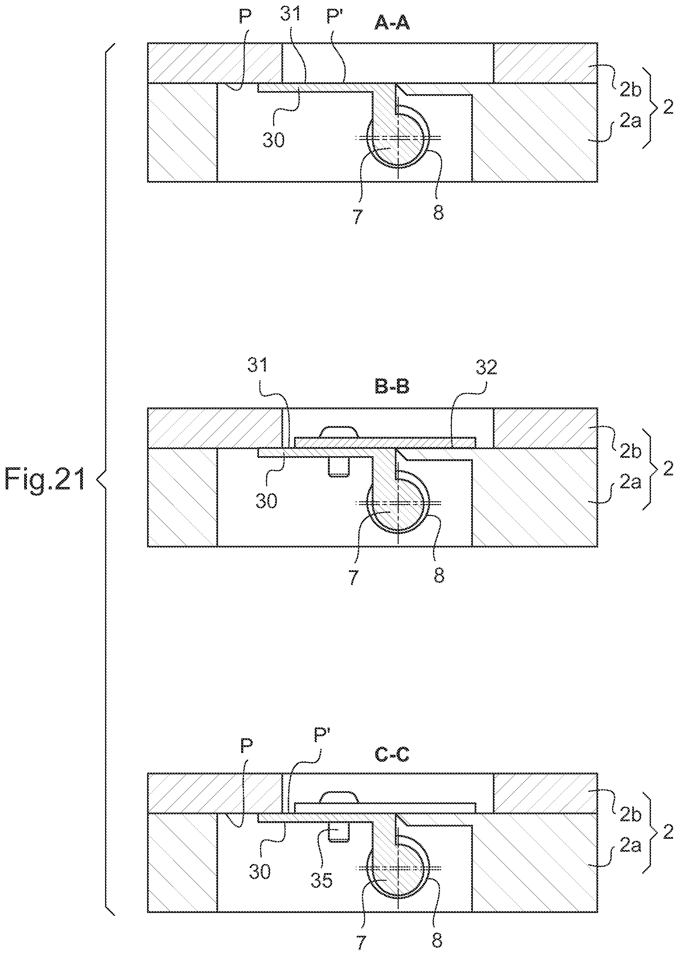

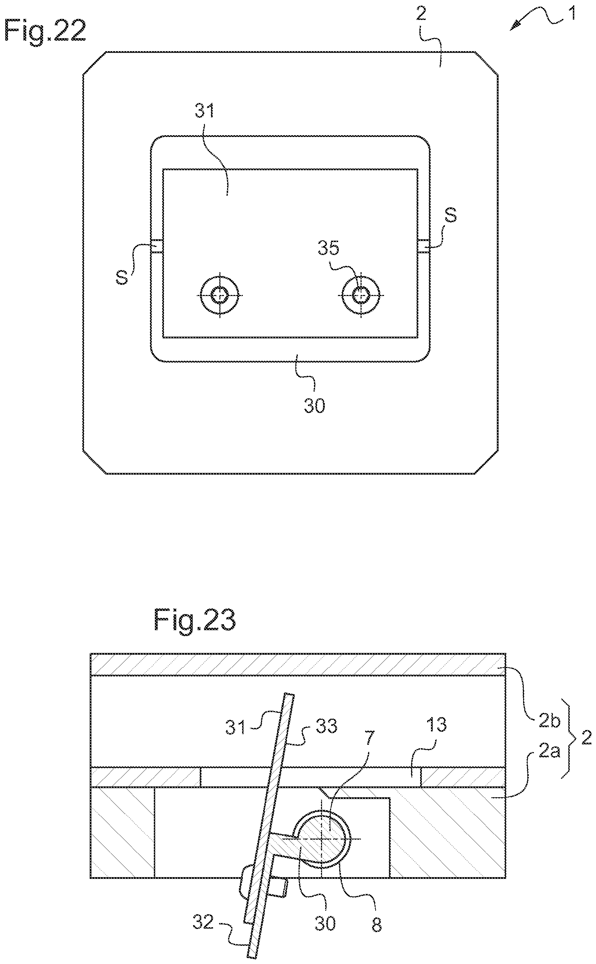

- les figures 12 à 23 se rapportent à une vanne selon un deuxième exemple de mise en oeuvre de l'invention, les figures 12 et 13 représentant en élévation la vanne, la figure 14 représentant le volet et l'axe isolément, la figure 15 étant une vue de dessus de la vanne de la figure 12, les figures 16 à 18 représentant chacune en coupe selon A-A, B-B et C-C une première vanne similaire à celle de la figure 15, les figures 19 à 21 représentant chacune en coupe selon A-A, B-B et C-C une deuxième vanne similaire à celle de la figure 15, la figure 22 représentant la vanne de la figure 15 de façon exagérée,
- la figure 23 représentant de façon schématique une vanne selon le deuxième exemple de mise en oeuvre de l'invention lorsqu'elle est de type « trois voies », et
- les figures 24 et 25 ont déjà été décrites.

On a représenté sur la figure 1 une vanne 1 couverte par l'invention. Sur cette figure, la vanne 1 est une vanne dite « deux voies » mais l'invention n'y est pas limitée, comme on le verra par la suite.

La vanne 1 qui va être décrite est une vanne utilisée dans un circuit d'air d'un moteur thermique, par exemple utilisé pour propulser un véhicule automobile.

La vanne 1 comprend un corps 2, par exemple réalisé en aluminium, en acier, en plastique ou en inox dans lequel est ménagé un conduit 3. Il s'agit par exemple d'un conduit d'admission, d'échappement ou d'un conduit formant une boucle de recirculation des gaz d'échappement (encore appelée boucle EGR), cette boucle pouvant être une boucle haute pression ou basse pression. Le corps 2 de la vanne peut être réalisé par l'assemblage de deux pièces 2a et 2b, ces deux pièces se contactant selon un plan P dont une paroi définit une partie du conduit 3, comme on le verra par la suite. Le plan P sera appelé « plan de joint » du corps 2 par la suite. Sur la figure 2, la pièce 2b n'est pas représentée.

Le conduit 3 est dans l'exemple considéré parcouru par des gaz pouvant atteindre une température élevée, par exemple jusqu'à 700°C.

Comme représenté sur les figures 1 et 2, la vanne 1 comprend un volet 5 disposé dans le corps et monté pivotant grâce à un axe 7 reçu dans un logement 8 du corps 2 par l'intermédiaire d'un ou plusieurs paliers non représentés. L'axe 7 s'étend selon une direction X et le ou les paliers présentent un jeu radial par rapport à la direction X permettant à l'axe 7 de se déplacer perpendiculairement à la direction X dans le palier et dans le logement 8. La figure 3 représente isolément le volet 5 et l'axe 7. Comme on peut le voir sur la figure 3, l'axe peut se présenter sous la forme d'un cylindre de section transversale circulaire. Un support 9 s'étendant radialement par rapport à l'axe 7 relie dans l'exemple décrit l'axe 7 et le volet 5.

Dans l'exemple de la figure 3, le volet 5 est globalement plan et il s'étend perpendiculairement à la direction selon laquelle s'étend le support 9.

Comme on le verra par la suite, le volet 5 présente deux zones de contact 11 et 12 avec le corps 2 lorsqu'il est dans la position fermée. La première zone de contact 11 s'étend d'un premier côté de l'axe 7, c'est-à-dire d'un premier côté du support 9 dans le cas présent, tandis que la deuxième zone de contact 12 s'étend d'un deuxième côté de l'axe 7, c'est-à-dire d'un deuxième côté du support 9 dans le cas présent. La deuxième zone de contact 12 est portée par une partie du volet se déplaçant dans une rainure 13 ménagée dans le conduit 3. La deuxième zone de contact 12 vient ici au contact du fond de la rainure 13

La distance entre le centre du logement 8 et le plan de joint P du corps 2 est désignée par « Dc ». Dans l'exemple des figures 1 à 11, la face supérieure du volet 5 définit un plan de joint P' du volet 5, comme expliqué par la suite, et la distance entre le centre de l'axe 7 et ce plan P' sera désignée par « Dv ».

Dans l'exemple des figures 5 à 7, la distance De est inférieure à Dv, c'est-à-dire que le plan de joint du volet P' est situé depuis l'axe 7 au-delà du plan de joint du corps P. Selon l'état de l'art, une telle configuration, qui peut s'expliquer par les marges d'erreur des cotes des différents éléments de la vanne 1 lors de la fabrication de celle-ci, ne permet pas au volet 5 de gagner sa position fermée, le volet étant coincé contre la paroi du conduit 3 avant qu'il n'ait pu atteindre la position fermée.

Sur la figure 5, le volet 5 est encore en position ouverte, des gaz pouvant circuler dans le conduit 3 et traverser la vanne 1. Le volet 5 n'est ici pas en contact avec le corps 2, ni la première zone de contact 11, ni la deuxième zone de contact 12 ne venant au contact du corps 2.

Sur la figure 6, le volet 5 se déplace vers la position fermée par pivotement de l'axe 7 dans le logement 8. Un contact s'établit alors entre le volet 5 et le corps 2 de la vanne 1.

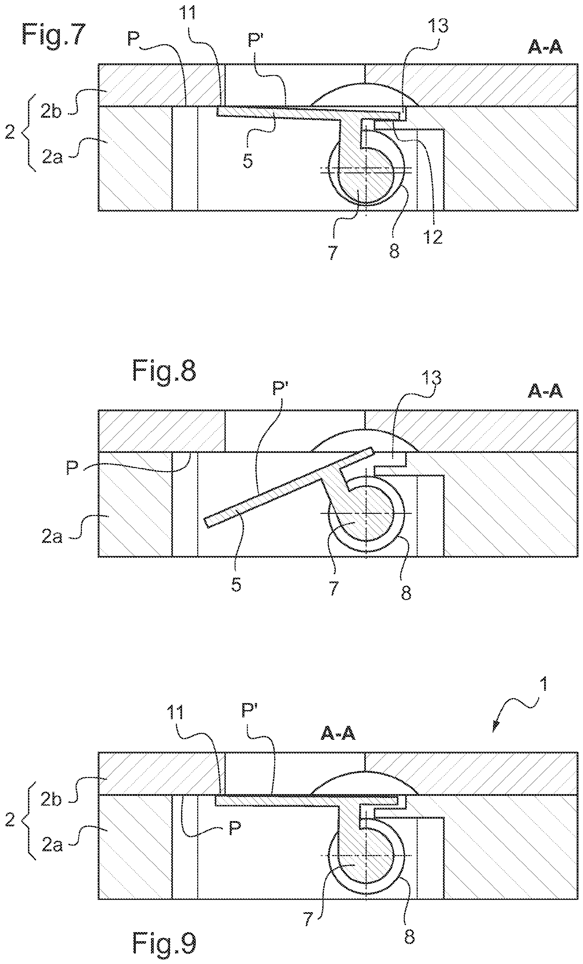

Comme on peut le voir sur la figure 7, contrairement aux vannes de l'art antérieur, le fait que le plan de joint P' du volet 5 soit situé au-delà depuis l'axe 7 du plan de joint P du corps 2 n'empêche pas le volet 5 d'atteindre une position fermée dans laquelle il vient en contact par deux zones distinctes 11 et 12 avec le corps 2. En effet, comme représenté sur la figure 7, sous l'effet du couple de fermeture appliqué sur le volet par un actionneur non représenté, l'axe 7 se déplace radialement par rapport à la direction X dans le logement 8, de sorte que les positions relatives par rapport à l'axe 7 du plan de joint P' du volet 5 et du plan de joint P du corps 2 sont modifiées et que le contact visible sur la figure 6 entre le volet 5 et le corps 2 n'empêche pas la poursuite du déplacement du volet 5 vers la position fermée.

Le volet vient dans cet exemple en contact avec deux parois distinctes du conduit 3. Seule la première zone de contact 11 appartient selon ce premier exemple de mise en oeuvre de l'invention au plan de joint P' du volet 5 et seule cette première zone de contact 11 vient en contact avec le plan de joint P du corps 2 dans cet exemple.

On a ainsi une seule zone de contact entre le plan de joint P du corps 2 et le plan de joint P' du volet 5 dans cet exemple.

La deuxième zone de contact 12 est ici portée par un plan parallèle au plan de joint P' du volet 5 et formant la face du volet 5 opposée à celle formée par le plan de joint P'.

La détermination du jeu dans le ou les paliers permettant d'éviter le coincement du volet 5 contre la paroi du corps 2, lorsque le volet 5 passe dans la position fermée, s'effectue par exemple en prenant en compte les imprécisions sur les cotes suivantes :
- distance Dv,
- distance Dc,
- épaisseur e du volet 5 au niveau de la deuxième zone de contact 12,
- hauteur h de la rainure 13.

On choisit dans cet exemple le jeu dans les paliers pour qu'il permette le non coincement du volet 5 dans les cas extrêmes suivants dus aux imprécisions de cote :
- (i) Dc maximum, Dv minimum, h maximum et e minimum, correspondant à une interférence potentielle dans le haut des paliers
- (ii) Dc minimum, Dv maximum, h minimum et e maximum, correspondant à une interférence potentielle dans le bas des paliers.

Quatre cotes peuvent être prises en compte pour la distance Dv, soit quatre taux d'imprécision unitaire à définir :
- la rectitude de l'axe 7, pour laquelle on fixe par exemple un taux d'imprécision unitaire de 0,02 mm sur le diamètre de l'axe 7,
- le positionnement des méplats d'entrainement sur l'axe 7, pour lequel on fixe par exemple un taux d'imprécision unitaire de 0,1 mm,
- le positionnement des méplats d'entrainement sur le volet 5, pour lequel on fixe par exemple un taux d'imprécision unitaire de 0,04 mm, et
- le positionnement du plan de joint P' du volet 5, pour lequel on fixe par exemple un taux d'imprécision unitaire de 0,04 mm.

Deux cotes sont à prendre en compte pour la distance Dc, soit deux taux d'imprécisions unitaires à définir :
- le positionnement du plan de joint P du corps 2, pour lequel on fixe par exemple un taux d'imprécision unitaire de 0,1 mm, et
- la coaxialité des paliers, pour laquelle on fixe par exemple un taux d'imprécision de 0,04 mm sur le diamètre des paliers

On a donc une variation de ±0,10 mm pour Dv et de ±0,07 mm pour Dc.

Dans le cas extrême (i), le rattrapage de jeu disponible vers le haut doit être d'au moins (+0,07)-(-0,1) =0,17 mm dans l'exemple considéré.

Dans le cas extrême (ii), le rattrapage de jeu disponible vers le bas doit être d'au moins (-0,07)-(+0,1) =-0,17 mm.

On obtient ainsi une marge d'erreur globale prédéfinie de 0,34 mm, ce qui fait que l'on dimensionne les paliers de manière à ce que chacun d'entre eux offre un jeu radial d'au moins 0,34/2 mm, ie 0,17 mm dans cet exemple.

Les figures 8 à 10 représentent également la vanne 1 lorsque le volet 5 passe de la position ouverte à la position fermée. Contrairement à l'exemple qui vient d'être décrit, la distance Dc est supérieure à la distance Dv, c'est-à-dire que le plan de joint du volet P' est situé en-deça depuis l'axe 7 du plan de joint du corps P. Dans ce cas, contrairement au cas précédent, il n'est pas nécessaire de modifier les positions relatives du plan de joint P' du volet 5 et du plan de joint P du corps 2 par rapport à l'axe 7 pour permettre au volet 5 de gagner la position fermée.

La deuxième zone de contact 12, située du côté de l'axe 7 opposé au côté portant la première zone de contact 11 permet d'empêcher un déplacement radial trop important de l'axe 7 dans le logement 8. La deuxième zone de contact 12 vient en effet en appui contre le fond de la rainure 13, empêchant la poursuite du déplacement de l'axe 7 dans le palier sous l'effet du couple de fermeture appliqué par l'actionneur de la vanne. On évite ainsi que, du fait de ce déplacement lié à l'existence du jeu radial dans les paliers, des fuites importantes n'existent lorsque le volet 5 est dans la position fermée.

Selon ce premier exemple de mise en oeuvre de l'invention, le volet 5 forme avec le corps 2 lorsque le volet est dans la position fermée un contact linéique au niveau de la première zone de contact 11 et au niveau de la deuxième zone de contact 12.

Les exemples des figures 1 à 10 portent sur une vanne dite « deux voies ». Néanmoins, le premier exemple de mise en oeuvre de l'invention couvre également des vannes dites « trois voies », comme le montre la figure 11. Sur cette figure, le conduit 3 comprend une entrée 20, une première sortie 21 et une deuxième sortie 22.La première sortie 21 permet par exemple aux gaz circulant dans le circuit d'échappement de poursuivre leur trajet dans celui-ci tandis que la deuxième sortie 22 débouche dans une boucle de recirculation vers l'admission. Dans cet exemple, le volet 5 de la vanne 1 des figures 1 à 10 comprend un prolongement 24 s'étendant au-delà de la partie du volet 5 portant la deuxième zone 12, de sorte que celle-ci est interposée entre la partie du volet portant la première zone 11 et ledit prolongement 24.

Sur la figure 11, le volet 5 est dans une position dans laquelle les gaz d'échappement recirculent dans la boucle EGR. Le prolongement 24 obture partiellement le passage vers la première sortie 21, afin de créer une contre-pression permettant de maintenir une pression suffisante en amont du volet 5 pour permettre un débit important vers la deuxième sortie 22.

On va maintenant décrire en référence aux figures 12 à 22 une vanne 1 selon un deuxième exemple de mise en oeuvre de l'invention.

Les figures 12 à 15 sont similaires aux figures 1 à 4. Selon ce deuxième exemple, le volet 5 comprend deux parties 30 et 31 formées par des pièces distinctes solidarisées entre elles. Chacune de ces parties se présente sous la forme d'une plaque et la face supérieure 32 de la plaque 30 est rapportée sur la face inférieure 33 de la plaque 31 sans que ces plaques 30 et 31 ne soient exactement superposées. Dans cet exemple, la face supérieure 32 de la plaque 30 et la face inférieure 33 de la plaque 31 sont coplanaires et appartiennent au plan de joint P' du volet 5. Le plan de joint P du corps 2 est similaire à celui décrit en référence au premier exemple de mise en oeuvre de l'invention. Des vis 35 sont par exemple utilisées pour fixer la plaque 31 avec la plaque 30.

La plaque 30 est dans l'exemple représenté plus proche de l'axe 7 que la plaque 31, et la plaque 30 est ici raccordée au support 9.

La face supérieure du volet 5 est ici définie par la partie de la face supérieure 32 de la plaque 30 non en regard de la plaque 31 et par la face supérieure de la plaque 31 tandis que la face inférieure du volet 5 est définie par la face inférieure de la plaque 30 et par la partie de la face inférieure 33 de la plaque 31 non en regard de la plaque 30.

Toujours dans cet exemple, comme on peut le voir sur la figure 14, la longueur 11 mesurée le long de la direction X de la plaque 30 est supérieure à la longueur 12 de la plaque 31.

Selon ce deuxième exemple de mise en oeuvre de l'invention, les deux pièces 2a et 2b du corps sont rigidement couplées entre elles au niveau du plan de joint P du corps 2.

Les figures 16 à 18 représentent chacune trois vues en coupe d'une position du volet 5 lorsque l'on est dans le cas où Dv est supérieur à Dc.

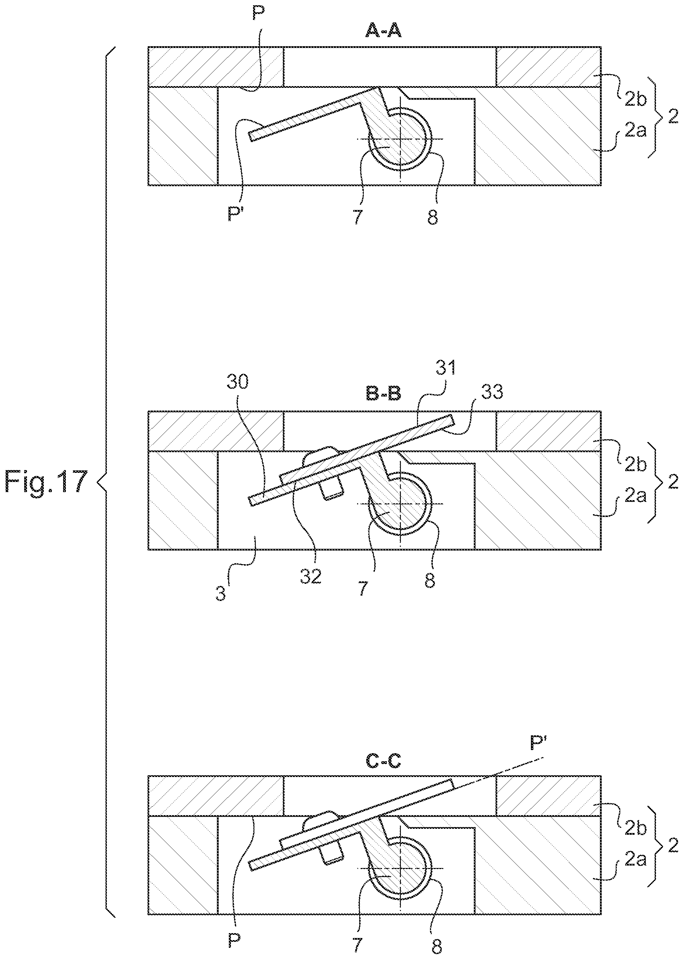

Sur la figure 16, le volet 5 est en position ouverte et il n'est pas en contact avec le corps 2. Sur la figure 17, le volet 5 est en cours de passage de la position ouverte vers la position fermée et la face supérieure 32 de la plaque 31 est sur le point de venir en contact avec le plan de joint P du corps 2, ce contact provoquant selon l'art antérieur le coincement du volet 5 dans le conduit 3.

Comme on peut le voir sur la figure 17, grâce au jeu radial existant dans le ou les paliers, l'axe 7 peut se déplacer radialement, permettant à la plaque 30 de s'éloigner du plan de joint P du corps 2. Le volet 5 peut poursuivre son déplacement jusqu'à atteindre la position fermée dans laquelle il vient en contact avec le plan de joint P du corps 2 par la première zone 11 et la deuxième zone 12. La première zone 11 appartient ici à la face supérieure 32 de la plaque 30 tandis que la deuxième zone 12 appartient à la face inférieure 33 de la plaque 31. La première zone 11 et la deuxième zone 12 font ainsi partie d'un même plan, à savoir le plan de joint P' du volet 5. Le contact entre le volet 5 et le corps 2 via les première 11 et deuxième 12 zones est ici plan, se faisant exclusivement entre les plans de joint P et P' respectifs.

La détermination du jeu dans le ou les paliers permettant d'éviter le coincement du volet 5 contre la paroi du corps 2, lorsque le volet 5 passe dans la position fermée, s'effectue par exemple selon ce deuxième exemple de mise en oeuvre de l'invention en prenant en compte les imprécisions sur les cotes suivantes :
- distance Dv, et
- distance Dc,

On choisit dans cet exemple le jeu dans les paliers pour qu'il permette le non coincement du volet 5 dans les cas extrêmes suivants dus aux imprécisions de cote :
- (i) Dc maximum, Dv minimum, correspondant à une interférence potentielle dans le haut des paliers
- (ii) Dc minimum, Dv maximum, correspondant à une interférence potentielle dans le bas des paliers.

Quatre cotes sont à prendre en compte pour la distance Dv, soit quatre taux d'imprécision unitaire à définir :
- la rectitude de l'axe 7, pour laquelle on fixe par exemple un taux d'imprécision unitaire de 0,02 mm sur le diamètre de l'axe 7,
- le positionnement des méplats d'entrainement sur l'axe 7, pour lequel on fixe par exemple un taux d'imprécision unitaire de 0,1 mm,
- le positionnement des méplats d'entrainement sur le volet 5, pour lequel on fixe par exemple un taux d'imprécision unitaire de 0,04 mm, et
- le positionnement du plan de joint P' du volet 5, pour lequel on fixe par exemple un taux d'imprécision unitaire de 0,04 mm.

Deux cotes sont à prendre en compte pour la distance Dc, soit deux taux d'imprécisions unitaires à définir :
- le positionnement du plan de joint P du corps 2, pour lequel on fixe par exemple un taux d'imprécision unitaire de 0,1 mm, et
- la coaxialité des paliers, pour laquelle on fixe par exemple un taux d'imprécision de 0,04 mm sur le diamètre des paliers

On a donc une variation de ±0,1 mm pour Dv et de ±0,07 mm pour Dc.

Dans le cas extrême (i), le rattrapage de jeu disponible vers le haut doit être d'au moins (+0,07)-(-0,1) =0,17 mm dans l'exemple considéré.

Dans le cas extrême (ii), le rattrapage de jeu disponible vers le bas doit être d'au moins (-0,07)-(+0,1) =-0,17 mm.

On obtient ainsi une marge d'erreur globale prédéfinie de 0,34 mm, ce qui fait que l'on dimensionne les paliers de manière à ce que chacun d'entre eux offre un jeu radial d'au moins 0,34/2 mm, ie 0,17 mm dans cet exemple.

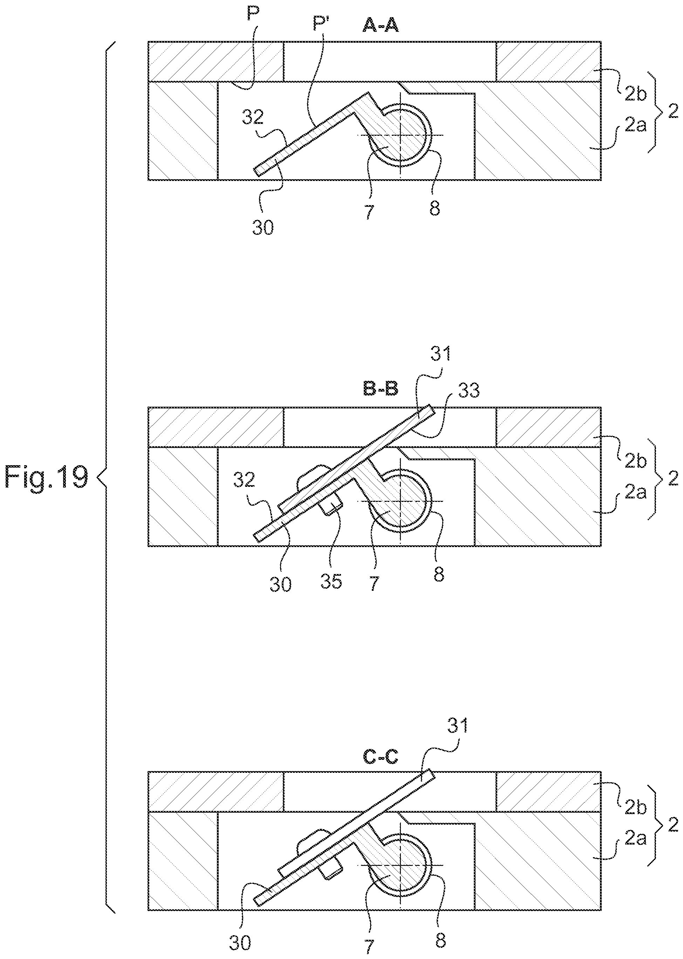

Les figures 19 à 21 sont similaires aux figures 16 à 18 mais correspondent à une vanne 1 dans laquelle Dv<Dc, c'est-à-dire que le plan de joint P' du volet 5 est en deçà depuis l'axe 7 du plan de joint P du corps 2. Comme représenté sur la figure 22 qui représente la vanne 1 selon le deuxième exemple de mise en oeuvre de l'invention vue de dessus en exagérant la différence entre la longueur 11 de la plaque 30 et la longueur 12 de la plaque 31, du fait de ces longueurs 11 et 12 différentes, en position fermée, deux sections de fuite S existent de part et d'autre de la plaque 31.

Bien que le deuxième exemple de mise en oeuvre de l'invention décrit en référence aux figures 12 à 21 porte sur des vannes dites « deux voies », le deuxième exemple de mise en oeuvre de l'invention couvre également les vannes dites « trois voies », comme on peut le voir sur la figure 22.

L'invention n'est pas limitée aux exemples qui viennent d'être décrits.

L'expression « comprenant un » doit être comprise comme synonyme de l'expression « comprenant au moins un », sauf lorsque le contraire est spécifié.

## Revendications

1. Vanne (1), notamment pour moteur thermique, comprenant :
- un corps (2) dans lequel sont ménagés : un logement (8) dans lequel est disposé au moins un palier, et un conduit (3) apte à être parcouru par un fluide, et
- un volet (5) monté pivotant dans le corps (2) par un axe (7) reçu dans le palier, le volet (5) pivotant entre :
- une position ouverte, et
- une position fermée dans laquelle il vient en contact avec le corps (2) par une première zone de contact (11) du volet située d'un premier côté de l'axe (7) et par une deuxième zone de contact (12) du volet située d'un deuxième côté de l'axe (7) opposé audit premier côté, la vanne (1) étant **caractérisée en ce que** l'axe (7) et le volet (5) sont disposés dans des plans distincts et **en ce que** l'axe (7) est reçu avec jeu radial dans le palier, le passage par le volet (5) de la position ouverte à la position fermée s'accompagnant d'un déplacement radial de l'axe (7) dans le palier.

2. Vanne selon la revendication 1, étant dépourvue d'élément flexible interposé entre le volet (5) et le corps (2) lorsque le volet (5) est dans la position fermée.

3. Vanne selon la revendication 1 ou 2, le volet (5) et l'axe (7) étant reliés par un support (9) s'étendant le long d'au moins une portion de l'axe (7).

4. Vanne selon l'une quelconque des revendications 1 à 3, le corps (2) présentant un plan de joint (P) du corps (2) venant en contact avec l'une au moins de la première (11) et de la deuxième (12) zone de contact du volet lorsque le volet (5) est dans la position fermée et l'une au moins de la première (11) et de la deuxième (12) zone de contact du volet appartenant à un plan de joint (P') du volet (5).

5. Vanne selon la revendication 4, la distance (Dc) entre le centre du logement (8) et le plan de joint (P) du corps (2) étant supérieure à la distance (Dv) entre le centre de l'axe (7) et le plan de joint (P') du volet (5).

6. Vanne selon la revendication 4, la distance (Dc) entre le centre du logement (8) et le plan de joint (P) du corps (2) étant inférieure à la distance (Dv) entre le centre de l'axe (7) et le plan de joint (P') du volet (5).

7. Vanne selon l'une quelconque des revendications 1 à 6, l'une au moins de la première (11) et de la deuxième (12) zone de contact du volet (5) formant avec le corps (2) un contact linéique lorsque le volet (5) est dans la position fermée.

8. Vanne selon la revendication 7, le volet (5) ayant en section une forme rectangulaire et la première zone de contact (11) et la deuxième zone de contact (12) étant situées à des extrémités opposées du volet (5).

9. Vanne selon la revendication 7 ou 8, seule la première zone de contact (11) du volet (5) appartenant au plan de joint (P') du volet (5), la deuxième zone de contact (12) du volet appartenant à un autre plan du volet (5).

10. Vanne selon la revendication 9, le plan de joint (P') du volet (5) et ledit autre plan du volet appartenant à des faces opposées du volet (5).

11. Vanne selon l'une quelconque des revendications 1 à 6, l'une au moins de la première (11) et de la deuxième (12) zone de contact du volet (5) formant avec le plan de joint (P) du corps (2) un contact plan lorsque le volet (5) est dans la position fermée.

12. Vanne selon la revendication 11, la première (11) et la deuxième (12) zone de contact du volet (5) appartenant au plan de joint (P') du volet (5) et chacune desdites zones de contact (11, 12) du volet contactant le plan de joint (P) du corps lorsque le volet (5) est dans la position fermée.

13. Vanne selon la revendication 11 ou 12, la première zone de contact (11) du volet étant portée par une première partie (30) du volet (5) et appartenant à la face supérieure (32) de ladite première partie (30), la deuxième zone de contact (12) du volet étant portée par une deuxième partie (31) du volet (5) et appartenant à la face inférieure (33) de ladite deuxième partie (31).

14. Vanne selon la revendication 13, la première (30) et la deuxième (31) partie étant rigidement couplées entre elles pour former le volet (5), notamment au niveau du plan de joint (P') du volet (5).

15. Vanne selon la revendication 13 ou 14, la longueur (12) de la deuxième partie (31) du volet, mesurée le long de l'axe (7), étant inférieure à la longueur (11) de la première partie (30) du volet, mesurée le long de l'axe (7).

16. Vanne selon l'une quelconque des revendications 4 à 15, le plan de joint (P') du volet (5) étant distinct de tout plan coupant l'axe (7).

17. Vanne selon l'une quelconque des revendications précédentes, étant une vanne d'au plus trois voies, et chacune de la position ouverte et de la position fermée étant une position extrême pour le pivotement du volet (5).

## Patentansprüche

1. Ventil (1), insbesondere für eine Brennkraftmaschine, umfassend:
- einen Körper (2), in dem eine Aufnahme (8), in der mindestens ein Lager angeordnet ist, und eine Leitung (3), die von einem Fluid durchlaufen werden kann, ausgebildet sind, und
- eine Klappe (5), die mittels eines im Lager aufgenommenen Zapfens (7) schwenkbar im Körper (2) angebracht ist,
wobei die Klappe (5) zwischen:
- einer geöffneten Stellung und
- einer geschlossenen Stellung, in der sie durch eine erste Kontaktzone (11) der Klappe, die sich auf einer ersten Seite des Zapfens (7) befindet, und durch eine zweite Kontaktzone (12) der Klappe, die sich auf einer zweiten Seite des Zapfens (7) gegenüber der ersten Seite befindet, in Kontakt mit dem Körper (2) kommt, schwenkbar ist, wobei das Ventil (1) **dadurch gekennzeichnet ist, dass** der Zapfen (7) und die Klappe (5) in verschiedenen Ebenen angeordnet sind, und dass der Zapfen (7) mit radialem Spiel in dem Lager aufgenommen ist, wobei das Passieren der Klappe (5) aus der geöffneten Stellung in die geschlossene Stellung von einer radialen Verschiebung des Zapfens (7) im Lager begleitet wird.

2. Ventil nach Anspruch 1, das kein flexibles Element aufweist, das zwischen der Klappe (5) und dem Körper (2) angeordnet ist, wenn sich die Klappe (5) in der geschlossenen Stellung befindet.

3. Ventil nach Anspruch 1 oder 2, wobei die Klappe (5) und der Zapfen (7) durch eine Stütze (9) verbunden sind, die sich entlang mindestens einem Teil des Zapfens (7) erstreckt.

4. Ventil nach einem der Ansprüche 1 bis 3, wobei der Körper (2) eine Fügeebene (P) des Körpers (2) aufweist, die mit der ersten (11) und/oder der zweiten (12) Kontaktzone der Klappe in Kontakt kommt, wenn sich die Klappe (5) in der geschlossenen Stellung befindet und die erste (11) und/oder die zweite (12) Kontaktzone der Klappe in einer Fügeebene (P') der Klappe (5) liegt/liegen.

5. Ventil nach Anspruch 4, wobei der Abstand (Dc) zwischen der Mitte der Aufnahme (8) und der Fügeebene (P) des Körpers (2) größer als der Abstand (Dv) zwischen der Mitte des Zapfens (7) und der Fügeebene (P') der Klappe (5) ist.

6. Ventil nach Anspruch 4, wobei der Abstand (Dc) zwischen der Mitte der Aufnahme (8) und der Fügeebene (P) des Körpers (2) kleiner als der Abstand (Dv) zwischen der Mitte des Zapfens (7) und der Fügeebene (P') der Klappe (5) ist.

7. Ventil nach einem der Ansprüche 1 bis 6, wobei die erste (11) und/oder die zweite (12) Kontaktzone der Klappe (5) mit dem Körper (2) einen linearen Kontakt bildet/bilden, wenn sich die Klappe (5) in der geschlossenen Stellung befindet.

8. Ventil nach Anspruch 7, wobei die Klappe (5) einen rechteckigen Querschnitt aufweist und sich die erste Kontaktzone (11) und die zweite Kontaktzone (12) an einander gegenüberliegenden Enden der Klappe (5) befinden.

9. Ventil nach Anspruch 7 oder 8, wobei nur die erste Kontaktzone (11) der Klappe (5) in der Fügeebene (P') der Klappe (5) liegt, wobei die zweite Kontaktzone (12) der Klappe (5) in einer anderen Ebene der Klappe (5) liegt.

10. Ventil nach Anspruch 9, wobei die Fügeebene (P') der Klappe (5) und die andere Ebene der Klappe auf einander gegenüberliegenden Seiten der Klappe (5) liegen.

11. Ventil nach einem der Ansprüche 1 bis 6, wobei die erste (11) und/oder die zweite (12) Kontaktzone der Klappe (5) mit der Fügeebene (P) des Körpers (2) eine Kontaktebene bilden, wenn sich die Klappe (5) in der geschlossenen Stellung befindet.

12. Ventil nach Anspruch 11, wobei die erste (11) und die zweite (12) Kontaktzone der Klappe (5) in der Fügeebene (P') der Klappe (5) liegen und jede der Kontaktzonen (11, 12) der Klappe (5) die Fügeebene (P) des Körpers berührt, wenn sich die Klappe (5) in der geschlossenen Stellung befindet.

13. Ventil nach Anspruch 11 oder 12, wobei die erste Kontaktzone (11) der Klappe von einem ersten Teil (30) der Klappe (5) getragen wird und zu der Oberseite (32) des ersten Teils (30) gehört, wobei die zweite Kontaktzone (12) der Klappe von einem zweiten Teil (31) der Klappe (5) getragen wird und zur Unterseite (33) des zweiten Teils (31) gehört.

14. Ventil nach Anspruch 13, wobei der erste (30) und der zweite (31) Teil starr aneinander gekoppelt sind, um die Klappe (5) zu bilden, insbesondere an der Fügeebene (P') der Klappe (5).

15. Ventil nach Anspruch 13 oder 14, wobei die Länge (12) des zweiten Teils (31) der Klappe, gemessen entlang dem Zapfen (7), kleiner ist als die Länge (11) des ersten Teils (30) der Klappe, gemessen entlang dem Zapfen (7).

16. Ventil nach einem der Ansprüche 4 bis 15, wobei die Fügeebene (P') der Klappe (5) von der gesamten den Zapfen (7) schneidenden Ebene verschieden ist.

17. Ventil nach einem der vorhergehenden Ansprüche, wobei das Ventil ein Ventil mit höchstens drei Wegen ist und sowohl die geöffnete Stellung als auch die geschlossene Stellung eine Endstellung für das Schwenken der Klappe (5) ist.

## Claims

1. Valve (1), in particular for an internal combustion engine, comprising:
- a body (2) including: a housing (8) in which is disposed at least one bearing and a duct (3) adapted to have a fluid pass through it, and
- a shutter (5) mounted to pivot in the body (2) by means of a pin (7) received in the bearing,
the shutter (5) pivoting between:
- an open position, and
- a closed position in which it comes into contact with the body (2) in a first contact area (11) of the shutter on a first side of the pin (7) and in a second contact area (12) of the shutter on a second side of the pin (7) opposite said first side,
the valve (1) being **characterized in that** the pin (7) and the shutter (5) are in different planes and **in that** the pin (7) is received with radial play in the bearing, the passage of the shutter (5) from the open position to the closed position being accompanied by radial movement of the pin (7) in the bearing.

2. Valve according to Claim 1, having no flexible element disposed between the shutter (5) and the body (2) when the shutter (5) is in the closed position.

3. Valve according to Claim 1 or 2, the shutter (5) and the pin (7) being connected by a support (9) extending along at least a portion of the pin (7).

4. Valve according to any one of Claims 1 to 3, the body (2) having a sealing plane (P) of the body (2) coming into contact with the first contact area (11) and/or the second contact area (12) of the shutter when the shutter (5) in the closed position and the first contact area (11) and/or the second contact area (12) of the shutter being in a sealing plane (P') of the shutter (5).

5. Valve according to Claim 4, the distance (Dc) between the center of the housing (8) and the sealing plane (P) of the body (2) being greater than the distance (Dv) between the center of the pin (7) and the sealing plane (P') of the shutter (5).

6. Valve according to Claim 4, the distance (Dc) between the center of the housing (8) and the sealing plane (P) of the body (2) being less than the distance (Dv) between the center of the pin (7) and sealing plane (P') of the shutter (5).

7. Valve according to any one of Claims 1 to 6, the first contact area (11) and/or the second contact area (12) of the shutter (5) forming a line contact with the body (2) when the shutter (5) is in the closed position.

8. Valve according to Claim 7, the shutter (5) having in section a rectangular shape and the first contact area (11) and the second contact area (12) being on opposite sides of the shutter (5).

9. Valve according to Claim 7 or 8, only the first contact area (11) of the shutter (5) being in the sealing plane (P') of the shutter (5), the second contact area (12) of the shutter being in another plane of the shutter (5).

10. Valve according to Claim 9, the sealing plane (P') of the shutter (5) and said other plane of the shutter being on opposite faces of the shutter (5).

11. Valve according to any one of Claims 1 to 6, the first contact area (11) and/or the second contact area (12) of the shutter (5) forming a plane contact with the sealing plane (P) of the body (2) when the shutter (5) is in the closed position.

12. Valve according to Claim 11, the first contact area (11) and the second contact area (12) of the shutter (5) being in the sealing plane (P') of the shutter (5) and each of said contact areas (11, 12) of the shutter contacting the sealing plane (P) of the body when the shutter (5) is in the closed position.

13. Valve according to Claim 11 or 12, the first contact area (11) of the shutter being on a first part (30) of the shutter (5) and on the upper face (32) of said first part (30), the second contact area (12) of the shutter being on a second part (31) of the shutter (5) and on the lower face (33) of said second part (31) .

14. Valve according to Claim 13, the first part (30) and the second part (31) being rigidly coupled to each other to form the shutter (5), in particular in the sealing plane (P') of the shutter (5).

15. Valve according to Claim 13 or 14, the length (12) of the second part (31) of the shutter measured along the pin (7) being less than the length (11) of the first part (30) of the shutter measured along the pin (7) .

16. Valve according to any one of Claims 4 to 15, the sealing plane (P') of the shutter (5) being a plane other than a plane intersecting the pin (7).

17. Valve according to any of the preceding claims, being at most a three-port valve, and each of the open and closed positions being an extreme position for the pivoting of the shutter (5).
